# EUROPÄISCHE PATENTSCHRIFT

(11) **EP 0 357 836 B1**
(45) Veröffentlichungstag und Bekanntmachung des Hinweises auf die Patenterteilung: **01.06.1994**
(21) Anmeldenummer: 88118893.2
(22) Anmeldetag: 12.11.1988
(51) Int. Cl.: F16C 39/06, F16C 17/08

(54) **Gleitlageranordnung für eine rasch rotierende Welle**
Friction bearing arrangement for a quickly rotating shaft
Arrangement de palier lisse pour un arbre tournant vite

(30) Priorität: 06.09.1988 DE 3830181
(43) Veröffentlichungstag der Anmeldung: 14.03.1990
(73) Patentinhaber: Rosemount GmbH & Co., 63450 Hanau (DE)
(72) Erfinder: Krause, Hans, Dr., D-6350 Bad Nauheim (DE); Röss, Rudi, D-6454 Bruchköbel 2 (DE); Koch, Helmut, D-6454 Bruchköbel (DE)
(74) Vertreter: Haar, Lucas Heinz Jörn, Dipl.-Ing.

(56) Entgegenhaltungen:
- EP-A- 0 059 283
- CH-A- 412 504
- DE-A- 2 608 669
- DE-U- 1 862 122
- GB-A- 539 409
- GB-A- 739 979

## Beschreibung

Die Erfindung betrifft eine Gleitlageranordnung für eine rasch rotierende Welle, insbesondere für eine Vorrichtung zur Messung des optischen Absorptionsvermögens einer Analysenprobe mit einer optischen Strahlungsquelle zur Beaufschlagung der Probe mit einem Strahlenbündel, einer Zerhackereinrichtung zur periodischen Unterbrechung des Meßstrahlenbündels, welche eine mit Lichtdurchtrittsöffnungen versehene, drehbar gelagerte Zerhackerscheibe und ein drehzahlgeregeltes Antriebssystem umfaßt, sowie einen Strahlungsdetektor für das von der Probe beeinflußte Meßlicht, wobei beide Enden der mit der Zerhackerscheibe fest verbundenen Welle Lagerzapfen aufweisen, die mit Lagerbuchsen korrespondieren, von denen die eine von einem Gehäuseteil gehalten ist.

Es ist bereits eine Gleitlageranordnung der angegebenen Art bekannt, bei der die Welle der Zerhackerscheibe in ortsfesten Lagern läuft, die Lagerbuchsen für die Lagerzapfen der Welle aufweisen, die in bestimmtem Maße in Längsrichtung der Welle justierbar sind, um das Lagerspiel zu verringern (DE-A-26 08 669) und einen leichten Lauf zu gewährleisten. Diese bekannte Lageranordnung hat jedoch den Nachteil, daß Fehler in den beiden Lagerbohrungen oder Toleranzen an den Lagerzapfen insbesondere zu einem radialen Lagerspiel führen, daß sich durch bloßes Verstellen der Lagerbuchsen in der Längsrichtung nicht beseitigen läßt. Außerdem darf mit der bekannten Anordnung das axiale Lagerspiel nicht zu klein eingestellt werden, da sonst bei Temperaturwechsel die Welle in dem Anlauflager klemmt und das Chopper-Rad stehenbleibt.

Der vorliegenden Erfindung liegt nun die Aufgabe zugrunde, eine Lageranordnung zu schaffen, die einen vollständig ruhigen und verschleißfreien Lauf einer Zerhackerscheibe ermöglicht.

Erfindungsgemäß wird diese Aufgabe dadurch gelöst, daß die andere Lagerbuchse von einer Lagerbrücke gehalten ist, die mit dem Gehäuseteil fest verbunden ist, daß die Lagerbrücke mit einer schräg zur Welle verlaufenden Bohrung versehen ist, deren Längsachse die Rotationsachse der Welle schneidet und daß in der Bohrung ein Magnet auf einem längsverschiebbaren Teil gehalten ist, dessen Magnetfeld auf einen mit der Welle fest verbundenen Ring aus einem metallischen Werkstiff, beispielsweise aus Weicheisen, einwirkt.

Vorzugsweise ist die Lagerbrücke aus einer zentralen, die Lagerbuchse aufnehmenden Partie und drei sich von der zentralen Partie radial nach außen zu in einer Ebene erstreckenden Haltearmen gebildet ist, wobei die freien Enden der Haltearme mit dem Gehäuseteil verschraubt, vernietet oder verklebt sind.

Mit Vorteil ist einer der sich etwa sternförmig von der zentralen Partie aus nach außen erstreckenden Haltearme der Lagerbrücke mit einer Bohrung versehen, die in einem Winkel (β) von 45° oder kleiner zur Ebene der Arme verläuft und deren Längsachse die Längsachse der in der zentralen Partie angeordneten Bohrung für das Lager in einem Bereich zwischen den beiden Lagern schneidet. Weitere Merkmale und Einzelheiten der Erfindung sind in den Ansprüchen näher beschrieben und gekennzeichnet.

Die Erfindung läßt die verschiedensten Ausführungsmöglichkeiten zu; eine davon ist in den anhängenden Zeichnungen schematisch dargestellt, und zwar zeigen:
- Figur 1: den Schnitt durch ein Gehäuseteil der Vorrichtung mit der Lagerbrücke, der Zerhackerscheibe und dem einen Polschuhpaar nach den Linien A - B gemäß Figur 2
- Figur 2: das eine Gehäuseteil der Vorrichtung mit der Zerhackerscheibe und Lagerbrücke in der Draufsicht
- Figur 3: das eine der beiden einstellbaren Lager für die Drehachse der Zerhackerscheibe nach den Figuren 1 und 2 in vergrößerter Darstellung und im Teilschnitt
- Figur 4: die Draufsicht auf das eine Gehäuseteil der Vorrichtung, von außen her gesehen
- Figur 5: die Draufsicht auf die Lagerbrücke
- Figur 6: den Schnitt durch die Lagerbrücke gemäß Figur 5 nach den Linien C - D

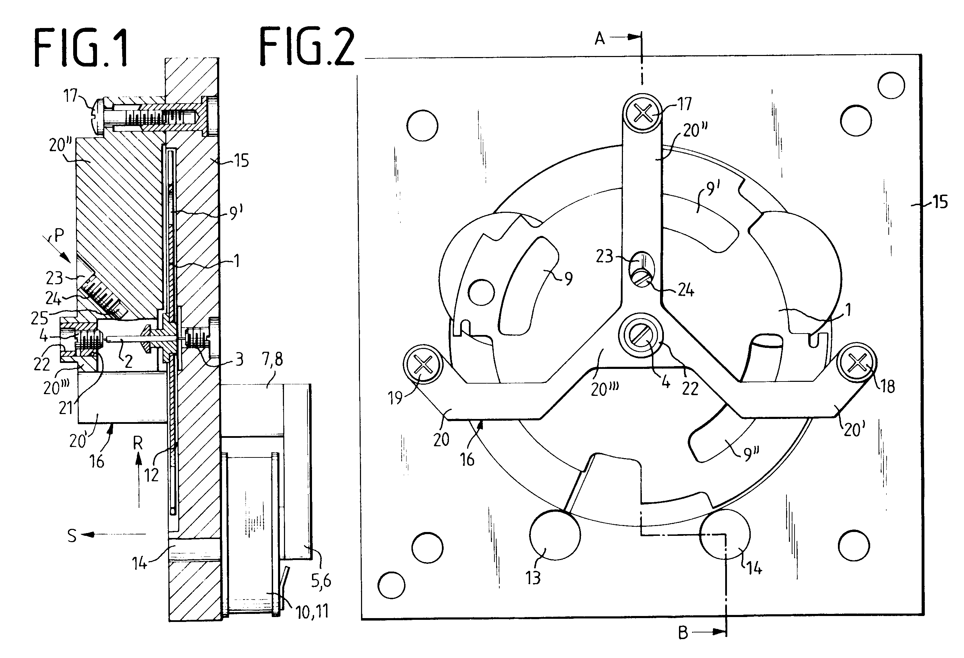

In Figur 1 ist eine aus Aluminium bestehende Zerhackerscheibe 1 dargestellt, die beispielsweise eine Stärke von ca. 0,5 mm besitzt und über eine Welle 2 in den Lagern 3, 4 drehbar gelagert ist. Es handelt sich hierbei um eine Edelsteinlagerung, wie sie aus der Feinwerktechnik bekannt ist. In der Zerhackerscheibe 1 sind, auf dem Umfang gleichförmig verteilt, mehrere, beispielsweise drei Öffnungen 9, 9′, 9˝ angeordnet, die in Verbindung mit den zwischen ihnen befindlichen Teilen der Zerhackerscheibe 1 die eigentliche Lichtzerhackung mit einer Frequenz bewirken, die sich aus dem Produkt von Scheibendrehzahl und Anzahl der Öffnungen ergibt.

Die dargestellte Vorrichtung ist für eine Zerhackerfrequenz zwischen etwa 50 Hz und etwa 500 Hz ausgelegt. Sie kann jedoch ohne weiteres auch für kleinste Frequenzen von einigen Hz und Frequenzen im Kilohertz-Bereich verwendet werden.

Der Zerhackerscheibe 1 sind zwei Wechselstrommagnete 5, 6 zugeordnet, deren wesentlicher Teil Magnetkerne sind, die entweder verlustarme Ferritkerne oder geblechte Eisenkerne sind. Die Magnetkerne besitzen vier Polschuhe 7, 8 (Figur 2), von denen nur ein Paar dargestellt ist, und die zwischen sich je einen Luftspalt 12 einschließen. Auf dem Joch eines jeden Magnetkerns befindet sich je eine Wicklung 10 bzw. 11. Die Wechselstrommagnete 5 und 6 übergreifen die Zerhackerscheibe 1 mit ihren Polschuhen 7, 8 außerhalb der Drehachse bzw. Welle 2 und außerhalb der Umlaufbahn der Öffnungen 9, 9′, 9˝, wobei unter außerhalb der Umlaufbahn auch bzw. insbesondere der radiale Bereich zwischen Welle 2 und den Öffnungen 9, 9′, 9˝ verstanden werden soll.

Den Wicklungen 10 und 11 werden Wechselströme zugeleitet, die nach Maßgabe der obigen Ausführungen eine vorgegebene bzw. veränderbare relative Phasenlage aufweisen. Durch die räumliche Anordnung von Zerhackerscheibe 1 und den Wechselstrommagneten 5 und 6 werden in der Scheibe 1 Wirbelströme induziert, die gemäß den obigen Ausführungen Drehmomente erzeugen, durch welche die Zerhackerscheibe 1 in Drehung versetzt und/oder abgebremst werden kann. Eine hier in die Einzelheiten gehende Beschreibung des Antriebs der Zerhackerscheibe 1 ergibt sich aus dem DE-Patent 26 08 669.

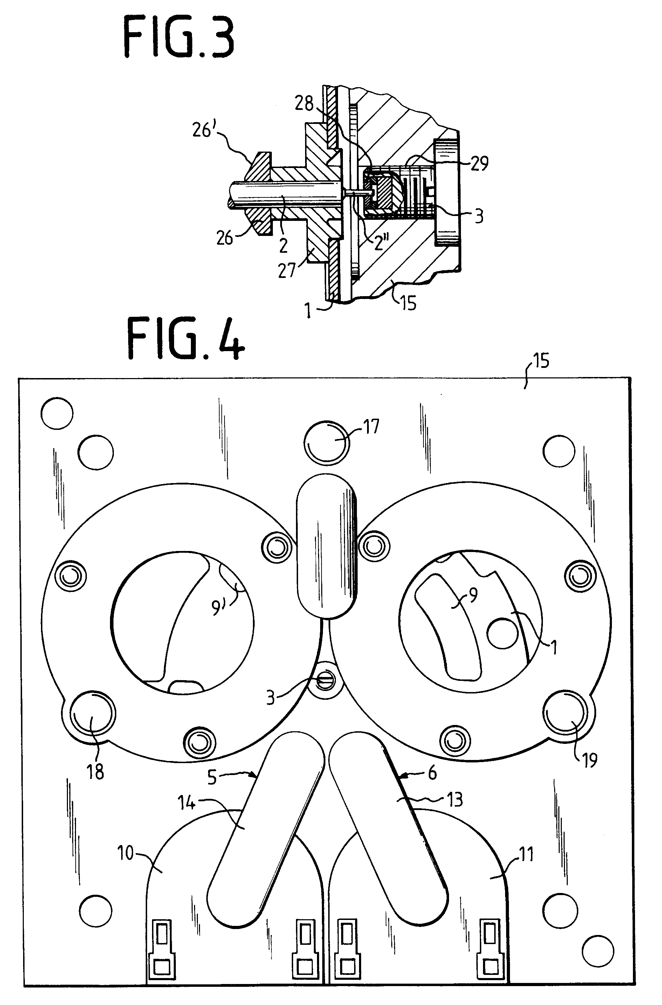

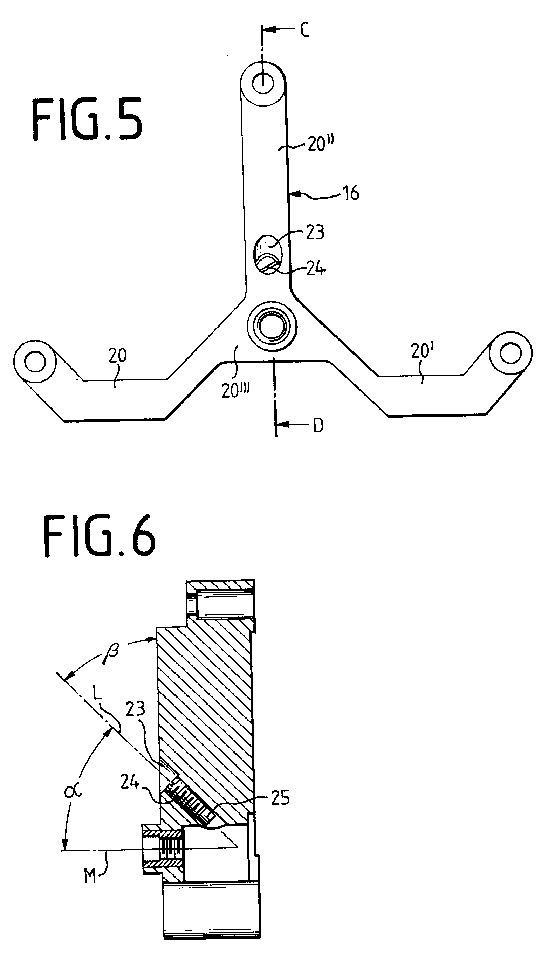

Da es für die Funktion, Lebensdauer und Leistungsfähigkeit der Vorrichtung, beispielweise zur Messung des optischen Absorptionsvermögens einer festen, flüssigen oder gasförmigen Probe, von großer Bedeutung ist, daß die Zerhackerscheibe 1 verschleißfrei, weitgehend reibungsfrei und insbesondere vibrationsfrei bzw. spielfrei gelagert ist, ist mit dem einen Gehäuseteil 15 eine Lagerbrücke 16 fest mit Hilfe von drei Schrauben 17, 18, 19 verbunden, die in den Figuren 5 und 6 näher dargestellt ist. Diese Lagerbrücke 16 weist drei Haltearme 20, 20′, 20˝ auf, die sich jeweils in radialer Richtung von einem Mittelteil 20‴ oder von einer zentralen Partie aus nach außen zu erstrecken. Die zentrale Partie 20‴ ist mit einer Bohrung 21 versehen, in die eine Buchse 22 eingepreßt ist, die ihrerseits das als Schraubteil ausgebildete Lager 4 enthält. Der sich nach oben zu erstreckende Haltearm 20 ˝ weist eine Bohrung 23 auf, deren Längsachse L, die sich durch die Bohrung 21 des Mittelteils 20 ‴ erstreckenden Längsbohrung M unter einem Winkel α von etwa 45° schneidet. In die Bohrung 23 ist ein Gewinde eingeschnitten, in das die Zentrierschraube 24 eingesetzt ist, die an dem der Drehachse 2 zugekehrten Ende einen Permanentmagneten 25 trägt. Wie aus Figur 3 ersichtlich ist, ist die Welle 2 an ihrem dem in das Gehäuseteil 15 eingeschraubten Lager 3 zugekehrten Ende mit einem Ring 26 fest verbunden, dessen der Zentrierschraube 24 zugekehrte Stirnfläche 26 kegelig ausgebildet ist, wobei die kegelige Fläche 26' sich etwa quer zur Längsachse L der Bohrung 23 erstreckt. Auf die Welle 2 ist außerdem ein Flansch 27 aufgeschrumpft, der seinerseits mit der Zerhackerscheibe 1 verstemmt ist. Die Welle 2 ist an beiden Enden mit Zapfen 2', 2'' versehen, wobei der Zapfen 2'' auf dem dem Gehäuseteil 15 zugekehrten Ende in einem Lagerstein 28 gehalten ist, der Teil des Lagers 3 ist, das in eine Gewindebohrung 29 des Gehäuseteils 15 eingeschraubt ist. Entsprechend dem Lager 3 ist auch das in die Buchse 22 der Lagerbrücke 16 eingeschraubte Lager 4 ausgebildet. Beide Lager 3, 4 lassen sich in axialer Richtung durch Drehen in ihrem Abstand zueinander bzw. in ihrem Abstand gegenüber der Welle 2 sehr fein einstellen; dieses Einstellen allein reicht jedoch nicht aus um den geforderten ruhigen Lauf der Zerhackerscheibe 1 und vor allem die geforderte Lebensdauer des Aggregats zu gewährleisten. Der erforderliche spielfreie Lauf wird erst durch den Magneten 25 der Zentrierschrauben 24 ermöglicht. Nach einer entsprechenden Verschiebung des Magneten 25 in Richtung auf den Flansch oder Ring 26 aus Weicheisen zu (Pfeilrichtung P), wirkt das vom Magneten 25 ausgehende Magnetfeld so stark auf die Welle 2 mit Ring 26 und Flansch 27 ein, daß diese (bezogen auf Figur 1) nach links (Pfeilrichtung S) und gleichzeitig auch nach oben zu (Pfeilrichtung R) gezogen wird. Ein möglicherweise in den Bohrungen der Lager 3, 4 bzw. an den Lagerzapfen 2', 2'' der Welle 2 noch vorhandenes axiales oder radiales Spiel kann sich während der Rotation der Zerhackerscheibe 1 nicht in bezug auf einen unruhigen Lauf auswirken, da die Welle 2 durch die auf den Ring 26 einwirkenden Magnetkräfte stets definiert einseitig in den Lagerbohrungen anliegt. Durch die relativ lang ausgebildeten Haltearme 20, 20′, 20˝ der Lagerbrücke 16 nimmt diese - und damit auch das Lager 4 - eine vollkommen kipp- und schwingungsfreie Lage zum Gehäuseteil 15 ein, wobei insbesondere auch eine Dezentrierung der Bohrung des Lagers 4 gegenüber der Bohrung des Lagers 3 ausgeschaltet wird. Im Falle, daß die beschriebene Vorrichtung bei einem Meß- oder Analysegerät Verwendung findet, wird erfahrungsgemäß das Chopper-Rauschen und Chopper-Springen bei allen Betriebstemperaturen dadurch beseitigt, daß der kleine Permanentmagnet 25 (der beispielsweise aus SmCo gefertigt ist) unter einem Winkel α zur Welle 2 und senkrecht über dieser, dem Gravitationsfeld entgegenwirkend, angeordnet wird, so daß die Lager 3, 4 um die radiale magnetische Kraft von der Gewichtskraft entlastet und die über die für diese Magnetfeldgeometrie wesentlich größere Axialkraft die Zerhackerscheibe 1 im permanenten Kontakt mit dem Anlauflager 4 hält.

Außerdem dämpfen die Wirbelstromverluste im Ring 26, die durch die Drehung der Scheibe 1 und damit des Rings 26 und durch das ortsfeste Magnetfeld des Permanentmagneten 25 erzeugt werden, die Drehoszillationsneigung der Scheibe 1.

## Patentansprüche

1. Gleitlageranordnung für eine rasch rotierende Welle (2), insbesondere für eine Vorrichtung zur Messung des optischen Absorptionsvermögens einer Analysenprobe mit einer optischen Strahlungsquelle zur Beaufschlagung der Probe mit einem Strahlenbündel, einer Zerhackereinrichtung zur periodischen Unterbrechung des Meßstrahlenbündels, welche eine mit Lichtdurchtrittsöffnungen (9, 9', 9'') versehene, drehbar gelagerte Zerhackerscheibe (1) und ein drehzahlgeregeltes Antriebssystem umfaßt, sowie einen Strahlungsdetektor für das von der Probe beeinflußte Meßlicht, wobei beide Enden der mit der Zerhackerscheibe (1) fest verbundenen Welle (2) Lagerzapfen (2', 2'') aufweisen, die mit Lagerbuchsen (3, 4) korrespondieren, von denen die eine (3) von einem Gehäuseteil (15) gehalten ist, **dadurch gekennzeichnet,** daß die andere Lagerbuchse (4) von einer Lagerbrücke (16) gehalten ist, die mit dem Gehäuseteil (15) fest verbunden ist, daß die Lagerbrücke (16) mit einer schräg zur Welle (2) verlaufenden Bohrung (23) versehen ist, deren Längsachse (L) die Rotationsachse (M) der Welle (2) schneidet und daß in der Bohrung (23) ein Magnet (25) auf einem längsverschiebbaren Teil (24) gehalten ist, dessen Magnetfeld auf einen mit der Welle (2) fest verbundenen Ring (26) aus einem magnetischen Werkstoff, beispielsweise aus Weicheisen, einwirkt.

2. Gleitlageranordnung nach Anspruch 1, **dadurch gekennzeichnet,** daß die Lagerbrücke (16) aus einer zentralen, die Lagerbuchse (4) aufnehmenden Partie (20''') und drei sich von der zentralen Partie radial nach außen zu in einer Ebene erstreckenden Haltearmen (20, 20', 20'') gebildet ist, wobei die freien Enden der Haltearme mit dem Gehäuseteil (15) verschraubt, vernietet oder verklebt sind.

3. Gleitlageranordnung nach den Ansprüchen 1 und 2, **dadurch gekennzeichnet,** daß einer der sich etwa sternförmig von der zentralen Partie (20''') aus nach außen zu erstreckenden Arme (20'') der Lagerbrücke (16) mit einer Bohrung (23) versehen ist, die in einem Winkel (β) von 45° oder kleiner zur Ebene der Arme (20, 20', 20'') verläuft und deren Längsachse (L) die Längsachse der in der zentralen Partie (20''') angeordneten Bohrung (21) für das Lager (4) in einem Bereich zwischen den beiden Lagern (3 und 4) schneidet.

4. Gleitlageranordnung nach einem oder mehreren der vorhergehenden Ansprüche, **dadurch gekennzeichnet,** daß der auf der Welle (2) fest angeordnete rotationssymetrische Ring (26) die Konfiguration eines Kegelstumpfs aufweist, wobei die Längsachse (L) der Gewindebohrung (23) für die mit einem Magneten (25) versehene Schraube (24) etwa rechtwinklig auf die Kegelmantelfläche (26') des Rings (26) ausgerichtet ist.

5. Gleitlageranordnung nach einem oder mehreren der vorhergehenden Ansprüche, **dadurch gekennzeichnet,** daß der Magnet (25) einstückig mit der Schraube (24) ausgebildet ist und diese nach dem Einsetzen in die Gewindebohrung (23) mit der Lagerbrücke (16) verstemmt, verklebt oder vernietet ist.

## Claims

1. A friction hearing arrangement for a shaft (2) rotating at high speed, in particular for an apparatus for measuring the optical absorptive power of a sample under analysis including an optical radiation source for projecting a beam of rays onto the sample, a chopper device for periodically interrupting the measuring beam and comprising a rotary chopper disk (1) provided with openings (9, 9', 9'') for the passage of light and a speed-controlled drive mechanism, as well as a radiation detector for the measuring light affected by the sample, the shaft (2) being fixedly connected with the chopper disk (1) and having at either end thereof a respective bearing journal (2', 2'') cooperating with a respective bearing bushing (3, 4), whereof the one bearing bushing (3) is held by a housing portion (15), **characterized in that** the other bearing bushing (4) is held by a bearing bracket (16) fixedly connected with the housing portion (15), that the bearing bracket (16) is provided with a bore (23) extending at an angle to the shaft (2), the longitudinal axis (L) of said bore intersecting the axis of rotation (M) of the shaft (2), and that the bore (23) receives therein a magnet (25) mounted on a longitudinally displaceable member (24), the magnetic field thereof acting on a ring (26) fixedly connected with the shaft (2) and made of a magnetic material as, for example, soft iron.

2. A friction bearing arrangement as claimed in claim 1, **characterized in that** the bearing bracket (16) is formed of a central portion (20''') receiving the bearing bushing (4) and three supporting arms (20, 20', 20'') extending from the central portion radially outwardly in one plane, with the free ends of the supporting arms being joined to the housing portion (15) by means of screwing, riveting or adhesive bonding.

3. A friction bearing arrangement as claimed in claims 1 and 2, **characterized in that** one of the arms (20'') of the bearing bracket (16) extending outwardly from the central portion (20''') in a spider configuration, approximately, is provided with a bore (23) extending at an angle (β) equal to, or smaller than, 45° relative to the plane of the arms (20, 20', 20''), the longitudinal axis (L) thereof intersecting the longitudinal axis of the bore (21) provided in the central portion (20''') for receiving the bearing (4) in an area intermediate the two bearings (3 and 4).

4. A friction bearing arrangement as claimed in one or several of the preceding claims, **characterized in that** the rotationally symmetrical ring (26) fixedly disposed on the shaft (2) is configured in the manner of a frustum of a cone, with the longitudinal axis (L) of the threaded bore (23) for receiving the screw (24) provided with a magnet (25) being arranged to extend at approximately right angles to the conical surface (26') of the ring (26).

5. A friction bearing arrangement as claimed in one or several of the preceding claims, **characterized in that** the magnet (25) is integrally formed with the screw (24), and that the screw, following its engagement within the threaded bore (23), is joined to the bearing bracket (16) by caulking, adhesive bonding, or riveting.

## Revendications

1. Agencement de paliers lisses pour un arbre (2) à rotation rapide, équipant en particulier un dispositif de mesure du pouvoir d'absorption optique d'un échantillon d'analyse comportant une source rayonnante optique destinée à projeter sur l'échantillon un faisceau de rayons, un dispositif vibreur destiné à interrompre périodiquement le faisceau de rayons de mesure et comportant un disque vibreur (1) rotatif doté d'ouvertures (9, 9', 9'') laissant passer la lumière, et un système d'entraînement à régulation de vitesse, ainsi qu'un détecteur de rayonnement mesurant la lumière influencée par l'échantillon, les deux extrémités de l'arbre (2) fixé au disque vibreur (1) étant équipées de tourillons (2', 2'') coopérant avec des coussinets (3, 4) dont l'un (3) est tenu par une partie (15) du boîtier, **caractérisé en ce que** l'autre coussinet (4) est tenu par un croisillon (16) fixé à cette partie (15) du boîtier, que ce croisillon (16) est percé d'un alésage (23) oblique par rapport à l'arbre (2), l'axe longitudinal (L) dudit alésage coupant l'axe de rotation (M) de l'arbre (2), et qu'un aimant (25) est monté dans l'alésage (23) sur une pièce (24) coulissant longitudinalement, le champ magnétique dudit aimant agissant sur un anneau (26) fixé sur l'arbre (2) et étant fabriqué d'un matériau magnétique, du fer doux par exemple.

2. Agencement de paliers lisses selon la revendication 1, **caractérisé en ce que** le croisillon (16) est formé d'une partie centrale (20''') destinée à recevoir le coussinet (4) et de trois bras (20, 20', 20'') qui s'étendent de la partie centrale radialement vers l'extérieur sur un même niveau, les extrémités libres desdits bras étant vissées, rivées ou collées à la partie (15) du boîtier.

3. Agencement de paliers lisses selon les revendications 1 et 2, **caractérisé en ce que** l'un des bras (20'') du croisillon (16) qui forme avec la partie centrale (20''') une sorte d'étoile est percé d'un alésage (23) qui décrit un angle (β) égal ou inférieur à 45° par rapport au niveau des bras (20, 20', 20''), et dont l'axe longitudinal (L) coupe l'axe longitudinal de l'alésage (21) du palier (4) placé dans la partie centrale (20'''), dans une zone comprise entre les deux paliers (3 et 4).

4. Agencement de paliers lisses selon une ou plusieurs des revendications précédentes, **caractérisé en ce que** l'anneau de rotation symétrique (26) fixé sur l'arbre (2) présente la configuration d'un cône tronqué, l'axe longitudinal (L) du taraudage (23) pour la vis (24) équipée d'un aimant (25) s'étendant à peu près perpendiculairement par rapport à l'aire conique (26') de l'anneau (26).

5. Agencement de paliers lisses selon une ou plusieurs des revendications précédentes, **caractérisé en ce que** l'aimant (25) fait corps avec la vis (24) et que celle-ci est matée, collée ou rivée au croisillon (16) après avoir été insérée dans le taraudage (23).
